# EUROPÄISCHE PATENTANMELDUNG

(11) **EP 2 267 615 A1**
(43) Veröffentlichungstag der Anmeldung: **29.12.2010**
(21) Anmeldenummer: 09163874.2
(22) Anmeldetag: 26.06.2009
(51) Int. Cl.: G06F 17/27, G06F 17/30

(54) **Verfahren zur Analyse und Verarbeitung von Suchworteingaben**

(71) Anmelder: Yatego GmbH, 78112 St. Georgen (DE)
(72) Erfinder: Ollmann, Michael, 83299, Aschau (DE)
(74) Vertreter: Betten & Resch

(57) **Zusammenfassung**

Die Erfindung schlägt ein computer-implementiertes Verfahren zur Analyse und Verarbeitung von Suchworteingaben zu Datensätzen in einer Zieldatenbank vor, aufweisend die Erfassung eines in ein Suchfenster eingegebenen Suchwortes vor Auslösen einer Suche; Ergänzung des erfassten Suchwortes durch Platzhalter für die Datenbankabfrage; Vergleich des ergänzten Suchwortes mit gespeicherten Einträgen in der Zieldatenbank; und in Abhängigkeit von dem Vergleich, Bestimmung von alternativen Suchwortvorschlägen, die Einträgen in der Zieldatenbank entsprechen, und Anzeige der alternativen Suchwortvorschläge zusammen mit der zugehörigen Anzahl von Einträgen im Zieldatensatz. Der Benutzer kann so schneller zu dem gewünschten Suchergebnis gelangen

## Beschreibung

### Gebiet der Erfindung

Die Erfindung betrifft ein Verfahren und ein Computersystem zur Anzeige von Eingabefehler-und Tippfehlerkorrektur- und Suchvorschlägen vor Ausführung eines Suchvorgangs.

### Verwandter Stand der Technik

Informationsseiten und insbesondere Online-Shopping-Systeme mit der Möglichkeit einer Suchfunktion mittels Benutzer-Eingabe von einem oder mehreren Suchwörtern in ein Suchfeld erreichen mit der Erkennung und Korrektur von Benutzereingabe- und Tippfehlern bzw. mit Vorschlägen zur Eingrenzung und Verbesserungen der Suche ein deutlich besseres Ergebnis.

Unter dieser Voraussetzung müssen herkömmliche Systeme die vom Benutzer gewünschte Suchanfrage erst vollständig ausführen, um feststellen zu können, dass es sich womöglich um eine Falscheingabe bzw. einen Tippfehler handelt. In solchen herkömmlichen Systemen wird in diesem Fall nach Ausführung der Suche eine neu generierte Seite erzeugt und angezeigt, auf welcher der Benutzer dann mögliche Korrekturen und Vorschläge findet, die er mittels Aktivierung des jeweiligen Links zur Suchausführung bringen kann.

Der vorliegenden Erfindung liegt die Aufgabe zu Grunde, herkömmliche Systeme zur Verarbeitung von Benutzer-Suchanfragen zu verbessern und insbesondere die Anzahl der zum Ziel führenden Tipp- und Eingabevorgänge für den Kunden zu reduzieren und die Suche somit schneller und bequemer zu machen.

### Zusammenfassung der Erfindung

Gelöst wird die Aufgabe durch ein computer-implementiertes Verfahren zur Analyse und Verarbeitung von Suchworteingaben zu Datensätzen in einer Zieldatenank mit den Schritten Erfassung eines in ein Suchfenster eingegebenen Suchwortes vor Auslösen einer Suche, Ergänzung des erfassten Suchwortes durch Platzhalter für die Datenbankabfrage, Vergleich des ergänzten Suchwortes mit gespeicherten Einträgen in der Zieldatenbank, und, in Abhängigkeit von dem Vergleich, Bestimmung von alternativen Suchwortvorschlägen, die Einträgen in der Zieldatenbank entsprechen, und Anzeige der alternativen Suchwortvorschläge, insbesondere Suchwortkorrekturen zusammen mit der zugehörigen Anzahl von Einträgen in der Zieldatenbank.

Durch die Fehlerkorrektur mit Anzeige von alternativen Suchwortvorschlägen und deren Relevanz schon während der Suchworteingabe - vor Auslösen einer Suche - kann der Benutzer schneller zu dem von ihm gewünschten Suchergebnis gelangen. Der Benutzer spart somit Zeit und der Betreiber eines Shopping- oder Auktionsportals erzielt höhere Umsätze bei geringerer Systemauslastung.

Vorzugsweise umfasst der Vergleichsschritt die Berücksichtigung typischer Tippfehler beim Eingeben eines Suchworts und/oder die Berücksichtigung von früheren erfolglosen Suchanfragen in der Zieldatenbank und von eingegebenen Korrektursuchwörtern, z.B. durch Aufzeichnung der User-Aktionen. So kann die Fehlerkorrektur optimiert werden.

Der Vergleichsschritt kann weiterhin eine Ähnlichkeitsanalyse, beispielsweise bezüglich syntaktischer, klanglicher und/oder semantischer Ähnlichkeit des eingegebenen und/oder des ergänzten Suchworts mit Einträgen in der Zieldatenbank umfassen.

Außerdem kann im Vergleichsschritt die Häufigkeit der Verwendung von Zieldatenbank-Einträgen als Suchwort berücksichtigt werden, wobei die Häufigkeit der Verwendung der Zieldatenbank-Einträge zeitabhängig gewichtet werden kann. So erhält man ein lernendes System für Suchwort-Korrekturvorschläge.

Vorzugsweise wird dem Benutzer die direkte Durchführung einer Suche basierend auf den alternativen Suchwortvorschlägen durch Navigation auf einen Suchwortvorschlag durch Mausklick oder dgl. ermöglicht.

Die Zieldatenbank kann beispielsweise die Datenbank eines Online-Shopping- oder - Auktionsportals sein. Die Erfindung ist aber selbstverständlich nicht auf eine bestimmte Anwendung beschränkt.

Vorzugsweise werden die alternativen Suchwortvorschläge per JavaScript angezeigt, ohne dass die angezeigte Internetseite neu geladen wird.

Die Erfindung schlägt außerdem ein Computersystem umfassend einen Server-Computer mit Zugriff auf eine Datenbanksystem vor, auf welchen Server-Computer Nutzer mittels eines Client-Computers über das Internet zur Ausführung einer Suchanfrage zu einem oder mehreren in dem Datenbanksystem abgespeicherten Zieldatensätze zugreifen können, welches Computersystem eingerichtet ist zur Ausführung des Verfahrens nach einem der Ansprüche 1-10.

### Kurzbeschreibung der Zeichnungen

Die Erfindung wird im Folgenden anhand eines Ausführungsbeispiels unter Bezugnahme auf die beiliegenden Zeichnungen im Detail erläutert. Dabei ist
Fig. 1 ein Flussdiagramm der wesentlichen Verfahrensschritte eines ersten Ausführungsbeispiels der Erfindung,
Fig. 2 eine schematische Hardwarekonfiguration eines Ausführungsbeispiels eines erfindungsgemäßen Computersystems, und
Fig. 3 ein detailliertere Flussdiagramm der Verfahrensschritte eines weiteren Ausführungsbeispiels der Erfindung,

### Detaillierte Beschreibung der Erfindung

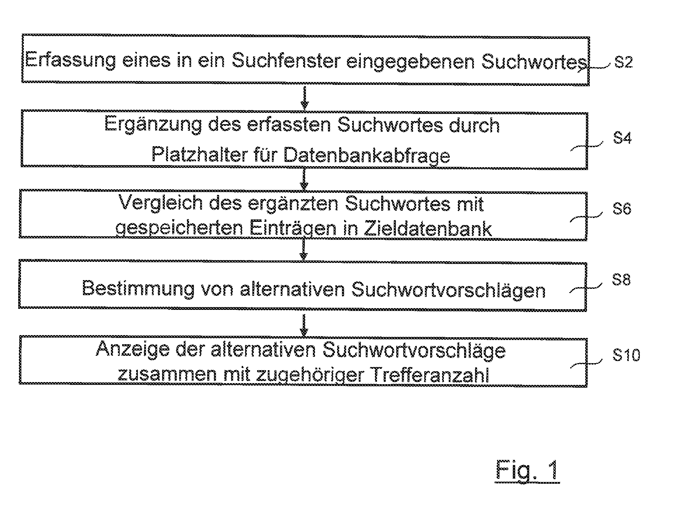

Fig. 1 ist ein Flussdiagramm, das schematisch die wesentlichen Verfahrensschritte eines ersten Ausführungsbeispiels der Erfindung zeigt. Zunächst wird ein in ein Suchfenster eingegebenes Suchwort in Verfahrensschritt S2 vor Auslösen einer Suche erfasst, das erfasste Suchwort dann in Schritt S4 durch geeignete Platzhalter ergänzt und das so ergänzte Suchwort in Verfahrensschritt S6 mit gespeicherten Einträgen in der Zieldatenbank verglichen. In Abhängigkeit von dem Vergleichsergebnis werden im nachfolgenden Schritt S8 alternative Suchwortvorschläge, die Einträgen in der Zieldatenbank entsprechen, bestimmt, welche alternativen Suchwortvorschläge im Verfahrensschritt S10 dann zusammen mit der zugehörigen Anzahl von Einträgen im Zieldatensatz als Relevanzindikator in einem dafür vorgesehenen Anzeigefeld angezeigt werden.

Gemäß einem Beispielszenario bietet ein Online-Shopping-System ein Eingabefeld für eines oder mehrere Suchwörter. Beim Betätigen des Such-Buttons wird eine entsprechende Produktsuchfunktion ausführt und dem Benutzer die jeweiligen Ergbnisse, z.B. eine Produktliste mit Bildern, zu den eingegebenen Suchwörtern anzeigt. Bei einer Informationsseite könnte es z.B. eine Liste passender Lexikontexte zu den Suchwörtern sein.

Während der Benutzer beginnt, Buchstabe für Buchstabe den Suchausdruck in das Eingabefeld einzugeben, wird mit jedem Tastendruck das bisher eingegebene Suchwort erfasst (Verfahrensschritt S2) und ein per Java-Script ausgelöster Programmcode (z.B. PHP) angestoßen, welcher eine optimierte Datenbank-gestützte Wortvergleichs- und Ähnlichkeitsanlyse ausführt (Verfahrensschritt S6), ohne dass der Benutzer den Such-Button aktivieren muss bzw. per Enter-Taste die Suche auslöst. Das Ergebnis wird dem Benutzer vor Ausführung der entsprechenden Suche in einem speziellen Bereich oder Fenster während der Eingabe und Veränderung des Suchausdrucks angezeigt (Verfahrensschritt S10). Jede Veränderung des Suchwortes wie auch das Löschen einzelner Zeichen führt zur Anzeige etwaiger angepasster Korrekturen und Vorschläge.

Der Benutzer hat jetzt die Möglichkeit, vor Ausführung der Suche entsprechende Eingabe- bzw. Tippfehler zu erkennen und zu korrigieren bzw. einen der angezeigten Vorschläge und Korrekturvorschläge per Auswahl mit der Maus bzw. per Auswahl über die Cursor-Tasten zu selektieren und weiter zu verändern bzw. die Suche für die Vorschläge direkt auszulösen.

Es sei nun angenommen, ein Benutzer möchte Produte zur Marke "adidas"^{®} finden. Er gibt das entsprechende Suchwort in das Suchfeld eines Shopping-Systems ein. Dabei vertippt sich der Benutzer beim Buchstaben "i"und schreibt statt "adidas" das wort "adodas". Das erfindungsgemäße System zeigt abhänig vom Suchwort sowie abhängig von der Position des oder der Tippfehler sowie abhängig von den Zielinformationsdaten - hier z.B. frühestens mit Eingabe des Buchstabens "o" und spätestens mit Eingabe des Buchstabens "s" - vor Auslösen der Suche in einem entsprechenden Fenster folgendes an:
Meinten Sie vielleicht:
**Adidas**

Der Benutzer kann jetzt per Maus oder Cursor-Tasten zum entsprechenden Vorschlag navigieren. Der Vorschlag wird dann durch die Navigation direkt ins Suchfeld übernommen, um ihn weiter zu verändern bzw. zu ergänzen oder mittels Mausklick bzw. durch Betätigen der Enter-Taste die Suche auszuführen.

Die optimierte Datenbank-gestützte Wortvergleichs- und Ähnlichkeitsanlyse kann auch in der Lage sein, nicht nur die wahrscheinlichste Wortkorrektur anzuzeigen, sondern diese mit der realen Such-Ergebnisanzahl zu erweitern.

Das Ergebnis könnte dann folgerndermaßen angezeigt werden:
Meinten Sie vielleicht:
**Adidas** (8552 Ergebnisse)

Die Vorteile dieses Verfahrens sind u.a.:
- Erkennung und Korrektur von Tipp- und Eingabefehlern vor Ausführung der eigentlichen Suche
- Reduzierung unnötiger Suchanfragen
- Reduzierung der Ausstiegs- / Abbruchrate
- Auslösen gezielter Suchanfragen
- Steigerung der Convertion-Rate

Durch dieses System können somit nicht nur die Kosten gesenkt werden, sondern vielmehr auch die Effektivität von lnformationsseiten erhöht werden bzw. kann auf Internetseiten, welche sich mit dem Verkauf von Produkten beschäftigen, der Umsatz gesteigert werden.

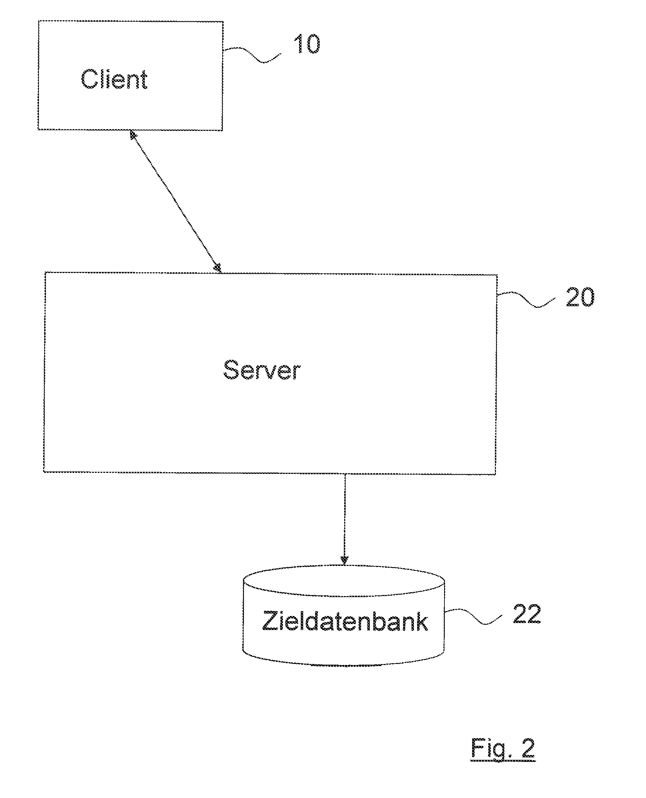

Fig. 2 zeigt schematisch die Hardwarekonfiguration eines Ausführungsbeispiels eines erfindungsgemäßen Computersystems. Dieses umfasst einen üblichen Server-Computer 20 mit Zugriff auf eine Datenbanksystem 22, auf welchem die Zieldaten abgespeichert sind. Nutzer können mittels eines Client-Computers 10 über das Interne oder eine andere Kommunikationsverbindung auf den Server-Computer 20 zugreifen, um eine Suchanfrage zu dem im Datenbanksystem 22 abgespeicherten Zieldatensätzen ausführen zu können.

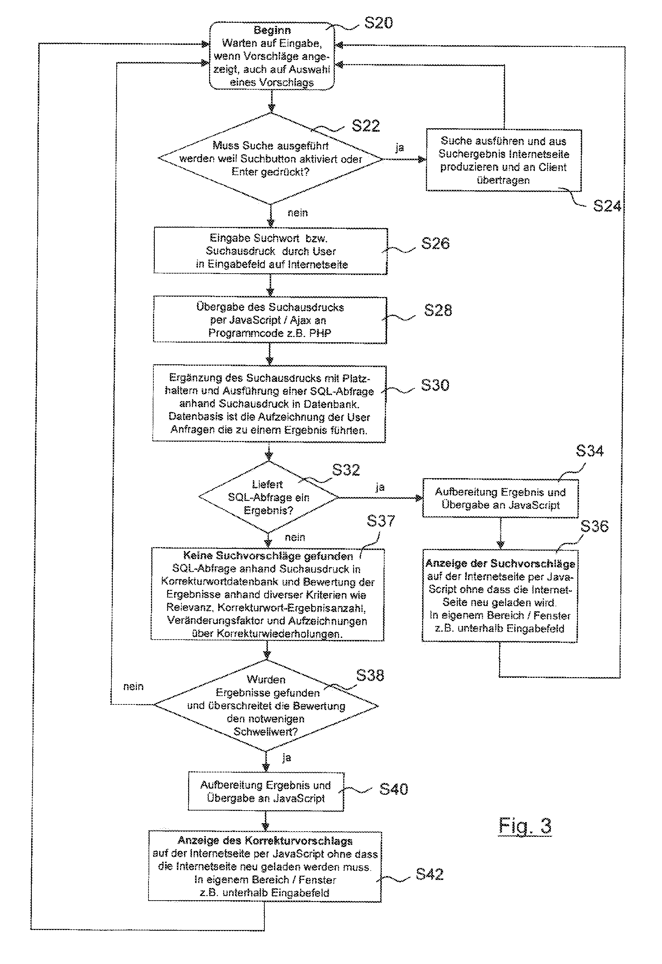

Das erfindungsgemäße Verfahren wird nunmehr anhand eines Beispiels detailliert unter Bezugnahme auf Fig. 3 erläutert.

Das System wartet auf eine neue Benutzereingabe (Verfahrensschritt S20). Wird die Suchfunktion aktiviert (Schritt S22), wird die Suche ausgeführt (Schritt S24). Sobald vom Benutzer ein Suchwort oder ein weiteres Zeichen seines Suchausdrucks in das Eingabefeld eingegeben wird (Schritt S26), löst das erfindungsgemäße Verfahren per Java-Script einen entsprechenden Programmcode, z.B. PHP oder C aus (Schritt S28). Hierbei wird mit jedem Tastendruck, dass sich momentan im Eingabefeld befindende Suchwort über Java-Script an den Programmcode übergeben, welcher das Suchwort analysiert und dieses gegebenenfalls mit ganz- oder teilweise vorberechneten Daten/Datensätzen innerhalb einer Datenbank vergleicht (Schritte S30, S32, S37). Eine speziell formuliert Datenbankabfrage in Verbindung mit einem entsprechenden Algorithmus liefert den oder die wahrscheinlichsten bzw. den oder die relevantesten Vorschläge oder Korrekturvorschläge bezogen auf das übergebene Suchwort. Die Such- bzw. Korrekturvorschläge werden (gegebenenfalls nach Vergleich mit einem vorgegebenen Schwellenwert gemäß Verfahrensschritt S38) in einem geeigneten Anzeigefeld des Client-Systems 10 angezeigt (Schritte S34, S36, S40, S42).

Dabei "lernt" das System neue Vorschläge und Korrekturen aus der statistischen Auswertung von Benutzer-Eingaben und Fehleingaben sowie durch Vorberechnung typischer Buchstabenvertauschungen, - weglassungen und - hinzufügungen sowie aus einer relevanten sortiments- oder zieldatenbezogen Datensammlung bzw. aus den Zieldaten selbst.

Im Gegensatz zur rein phonetischen Analyse bzw. im Gegensatz zu einer Levenshtein-Analyse bietet das System den Vorteil der zieldaten- oder zielsortimentsbezogenen Vorschlagsbildung und Korrektur, da die gesamte Datenbasis z.B. der gespeicherten Produkt- und Informationsdaten zur Analyse und zum Vergleich herangezogen werden kann bzw. Einfluss auf die abzufragende Datenbasis hat.

### Beispiel:

Bei Eingabe der Buchstaben "SGH", bezogen auf ein Sortiment von Damenmode, würde einen Tippfehler erkannt und ggf. eine mögliche Korrektur angeboten, da kein Damenmode-Produkt die Kennzeichnung "SGH" trägt.

Es könnte angezeigt werden:
Meinten Sie vielleicht:
**BH** (670 Ergebnisse)

Bei einem vollständigen Sortiment von Mobiifunkgeräten aller Hersteller wäre "SGH" kein Tippfehler, da "SGH" meistens ein Bestandteil von Typenbezeichnungen für Mobiltelefone der Marke Samsung ist.

Es könnte angezeigt werden:

| | |
|---|---|
| SGH F480 | (60 Ergebnisse) |
| SGH F480 pink | (7 Ergebnisse) |
| SGH F480 tasche | (9 Ergebnisse) |
| SGH F-480 | (11 Ergebnisse) |
| SGH F480v | (5 Ergebnisse) |

Die Reihenfolge kann bestimmt werden durch die Relevanz der Vorschläge oder z.B. alphabetisch sortiert sein bzw. im Fall der Anzeige der Ergebnisanzahl aufsteigend oder absteigend sortiert nach der Anzahl der Ergebnisse.

Der Kern der zur Analyse benötigten Daten besteht in der Aufzeichnung der von Benutzern ausgeführten Suchanfragen, mit der zugehörigen Speicherung der jeweiligen Ergebnisanzahl sowie der Häufigkeit des eingegeben Suchworts mit einer über die Zeit abnehmenden Bewertung. Dabei könnte die Anzahl des heute eingegebenen Suchwortes "adidas" mit einem Bewertungsfaktor 8 gespeichert und bewertet werden, während genau dieser in der Datenbank jetzt gespeicherte Datensatz z.B. nach 30 Tagen nur noch mit einen Faktor 4 bewertet wird.

Zweck dieser über die Zeit abnehmenden Bewertung ist die Schaffung der Möglichkeit des schnellen"Lernens" des Systems.

Angenommen, die Firma Samsung brächte ein neues Handymodell "SGH F500" auf den Markt so würde es bei einer Einheitsbewertung unter Umständen erst nach langer Zeit oder niemals dazu kommen, dass "SGH F500" in Korrekturen oder Vorschlägen auftaucht, da das ältere Modell "SGH F480" über einen entsprechenden "Punktevorsprung" verfügt. Die über die Zeit abnehmende Bewertung der gespeicherten Suchanfragen gleicht diesen Punktevorsprung aus.

Ein weiterer Teil der notwendigen Informationen besteht in der Aufzeichnung von Suchanfragen, die zu wenigen oder keinen Treffern führten mit der gleichzeitigen Speicherung des durch den Benutzer eingegebenen Korrektursuchwortes, welches zu einer größeren Trefferanzahl führte als das zuvor eingegebene Wort. Werden von verschiedenen Benutzern, durch ihre Suchanfragen an das System, Datensätze aus Suchwort und Korrektursuchwort erzeugt, welches schon in der Datenbank existieren, wird der entsprechende Zähler in der Datenbank erhöht. Zusätzlich wird für jeden Datensatz aufgezeichnet, wie viele Buchstaben durch den Benutzer verändert wurden, um das Suchwort in das Korrektursuchwort zu verändern.

Vorschläge und Korrekturvorschläge können anhand der jetzt bestehenden Datenbasis bezogen auf ein Suchwort ermittelt werden. Dabei "lernt" das System ständig aus den Benutzer-Eingaben und Benutzer-Fehleingaben. Mit wachsender Datenmenge wird das Ergebnis der Vorschläge und Korrekturen stetig relevanter und besser.

Das optimale Ergebnis wird durch die zeichenweise Analyse des eingegebenen Suchwortes und die Bewertung von Sonderzeichen bezogen auf die Datenbasis in Verbindung mit Häufigkeiten, Veränderungszähler sowie der über die Zeit abnehmenden Bewertung der gespeicherten Daten, erreicht. Ein weiterer Faktor ist die Gesamtlänge des Suchwortes im Vergleich zur Gesamtlänge der gespeicherten wahrscheinlichen Korrekturvorschläge.

Die Erfindung schlägt somit ein Datenbank-gestütztes, selbst lernendes System vor, welches sortiments- bzw. zielinformationsabhängige Vorschläge und Korrekturen produziert und anzeigt, bevor die eigentliche Suche durch den Benutzer ausgeführt wird.

Das System ist in der Lage, das Ergebnis in verschiedenster Weise mit zusätzlichen Informationen in einer gewünschten Sortierung, auch nach Relevanz, anzubieten. In Zeiten von immer komplexeren Begriffen und Produktbezeichnungen, insbesondere auch im technischen Bereich ist das System in der Lage Vorschläge zu liefern ohne, dass der Benutzer die vollständige Bezeichnung oder Produktbezeichnung wissen bzw. in vollständig ins Suchfeld eingegeben haben muss und bevor die eigentliche Suche durch den Benutzer ausgeführt wird.

Dabei reicht in dem beschriebenen Beispiel die Eingabe von "SGH F", um alle möglichen Samsung Mobiltelefone der F-Serie von "SGH F300" bis "SGH F480" nach Relevanz, alphabetisch oder Trefferanzahl sortiert, anzuzeigen. Allein das Wissen, dass es sich um ein "SGH F" handelt führt den Benutzer sicher und schnell zum gewünschten Ergebnis. Mit konventionellen Suchsystemen würde der Benutzer ohne genaue Typenbezeichnung womöglich nach mehreren erfolglosen Suchen die Suche ohne Ergebnis ganz aufgeben.

## Patentansprüche

1. Computer-implementiertes Verfahren zur Analyse und Verarbeitung von Suchworteingaben zu Datensätzen in einer Zieldatenbank, aufweisend die Schritte:
a) Erfassung eines in ein Suchfenster eingegebenen Suchwortes vor Auslösen einer Suche;
b) Ergänzung des erfassten Suchwortes durch Platzhalter für die Datenbankabfrage;
c) Vergleich des ergänzten Suchwortes mit gespeicherten Einträgen in der Zieldatenbank: und
d) in Abhängigkeit von dem Vergleich, Bestimmung von alternativen Suchwortvorschlägen, die Einträgen in der Zieldatenbank entsprechen, und Anzeige der alternativen Suchwortvorschläge zusammen mit der zugehörigen Anzahl von Einträgen im Zieldatensatz.

2. Verfahren nach Anspruch 1, wobei Vergleichsschritt c) die Berücksichtigung von Eingabefehlern und typischen Tippfehlern beim Eingeben eines Suchworts umfasst.

3. Verfahren nach Anspruch 1 oder 2, wobei Vergleichsschritt c) die Berücksichtigung von früheren erfolglosen Suchanfragen in der Zieldatenbank und von eingegebenen Korrektursuchwörtern umfasst.

4. Verfahren nach einem der Ansprüche 1 - 3, wobei Vergleichsschritt c) eine Ähnlichkeitsanalyse des eingegebenen und/oder des ergänzten Suchworts mit Einträgen in der Zieldatenbank umfasst.

5. Verfahren nach Anspruch 4. wobei die Ähnlichkeitsanalyse eine syntaktische, klangliche und/oder semantische Ähnlichkeit umfasst.

6. Verfahren nach einem der Ansprüche 1 - 5, wobei im Vergleichsschritt c) die Häufigkeit der Verwendung von Zieldatenbank-Einträgen als Suchwort berücksichtigt wird.

7. Verfahren nach Anspruch 6, wobei die Häufigkeit der Verwendung der Zieldatenbank-Einträge zeitabhängig gewichtet wird.

8. Verfahren nach einem der Ansprüche 1 - 7, wobei dem Benutzer die direkte Durchführung einer Suche basierend auf den alternativen Suchwortvorschlägen durch Navigation auf einen Suchwortvorschlag ermöglicht wird.

9. Verfahren nach einem der Ansprüche 1 - 8, wobei die Zieldatenbank die Datenbank eines Online-Shopping- oder -Auktionsportals ist.

10. Verfahren nach einem der Ansprüche 1 - 9, wobei in Verfahrensschritt d) die alternativen Suchwortvorschläge per JavaScript angezeigt werden, ohne dass die angezeigte Internetseite neu geladen wird.

11. Computersystem umfassend einen Server-Computer (20) mit Zugriff auf eine Datenbanksystem (22), auf welchen Server-Computer (20) Nutzer mittels eines Client-Computers (10) über das Internet zur Ausführung einer Suchanfrage zu einem in dem Datenbanksystem (22) abgespeicherten Zieldatensatz zugreifen können, welches Computersystem eingerichtet ist zur Ausführung des Verfahrens nach einem der Ansprüche 1-10.
